# EUROPEAN PATENT APPLICATION

(11) **EP 0 636 965 A1**
(43) Date of publication of application: **01.02.1995**
(21) Application number: 93110688.4
(22) Date of filing: 05.07.1993
(51) Int. Cl.: G06F 3/033, G09G 1/16

(54) **Displaying graphic data**

(71) Applicant: International Business Machines Corporation, Armonk, N.Y. 10504 (US)
(72) Inventor: Massimo, Messina, I-00198 Roma (IT)
(74) Representative: Zerbi, Guido Maria

(57) **Abstract**

A method and system for the management of graphs comprised of a high number of points without affecting the readability of the graph itself. The method and system also allow to keep in the computer memory a number of points greater than the number of points that can be shown in the assigned screen region.
Scrolling functions operate only on the part of the chart representing the data, without the involvement of other portions like legends, titles, scales, descriptions.

## Description

This invention relates to a method and system for managing the display of data values and more particularly for managing a graphic representation of said data in an interactive workstation data processing system.

Data representation is usually obtained by generalized programs that shield the programmer from the complexity needed to control the system components responsible for the graphics. In representing numeric values in graphic format it is usually possible to show any number of points by automatically determining the chart parameters (window dimensions, number of points to be displayed in the window, scale, representation format etc.), so as to include all of the data. There is also the need of showing data incoming from external devices like electronic equipment or computer networks. In many applications, particularly those related to the monitoring of values, an automatic refresh of the chart is needed any time a new value is available.

It is known the use of scale modification functions to show the data in graphic format.
When new data are received and a refresh is needed, new points are added to the graph and the scale of the chart is reduced if the space needed is not available on the screen region assigned.
Such a method achieves the result of completely confining the chart in the screen region assigned to the graphic representation. This method, however has the obvious drawback of an uneasy reading when the points to be shown are numerous or the space assigned to the chart is small.

Another known method saves the chart representation in a temporary memory portion and, by operating the scroll functions in the four orthogonal directions, it allows any desired part of the graph to be seen through the window delimited by the assigned region of screen. When new data are received they are added in the temporary memory portion and the whole graph has to be rebuilt.
This method, while allowing an easier reading when there are many points to be shown, has the drawback that a portion of the graph is not visible, and that said portion may contain important information for interpreting the graph itself such as, for example, the type and the description of the represented values.
Another drawback is the difficulty for the user to find and display a new desired part of the graph after the rebuilding of the old graph.

It is therefore an object of the present invention to overcome the above drawbacks of the prior art.

The invention as claimed allows the management of graphs comprised of a high number of points without affecting the readability of the graph itself. The invention also allows to keep in the computer memory a number of points greater than the number of points that can be shown in the assigned screen region.
Scrolling functions operate only on the part of the chart representing the data, without the involvement of other portions like legends, titles, scales, descriptions.
According to the invention two types of information are managed, the maximum number of points (values) that can be stored in memory (MEMPT) and the number of points shown on the graph (GRAFPT), automatically enabling the user to operate the scroll functions when the number of points actually present in memory is greater than GRAFPT.
In the specific embodiment described later on, said scrolling functions work horizontally and the chart is conveniently scaled according to the GRAFPT value.
In the case of values incoming from external sources, the new value is substituted for the oldest one when the number of points stored in memory is equal to MEMPT. This operation allows to maintain constantly in memory a predetermined number of points which correspond to the more recent and, in general, more interesting ones.

The foregoing and other objects, features and advantages of the invention will be apparent from the following more particular description of the preferred embodiment of the invention, as illustrated in the accompanying drawings.
Fig. 1 is a schematic diagram of a data processing system embodying the invention
Figg. 2, 3, 4 and 5 are examples of the way the data are graphically represented with the method of the invention.
Fig. 6 is a schematic diagram of the process of displaying the graphical data.

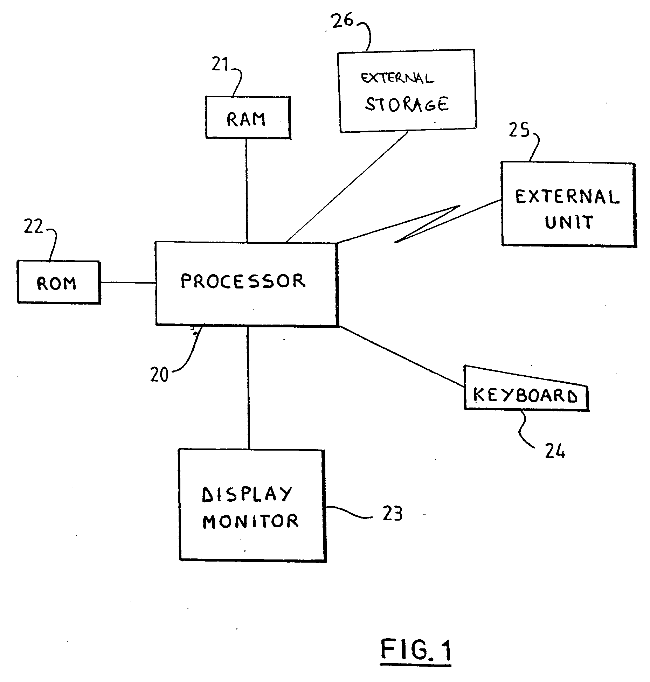

Figure 1 describes the data processing system on which the preferred embodiment of the present invention operates.
The system includes a processor (20), a random access memory (RAM) (21), a read only memory (ROM) (22), a display monitor (23), a keyboard (24), a connection with external unit (25) such as a host computer or other data processing systems and an external storage (26).
While the system is operating, a window oriented operating system is present in RAM memory and controls the displaying of windows on display monitor (23).

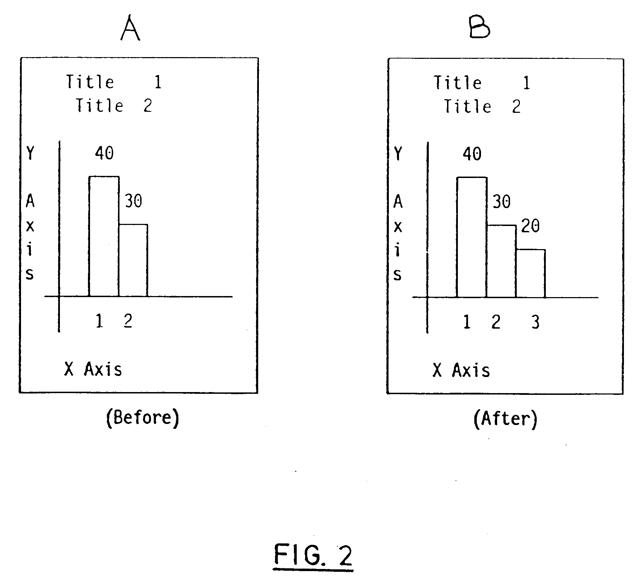

In the examples shown in figures 2 to 5 it is assumed that the graphs are displayed on the monitor display (23) and data are stored in RAM memory (21). It is also assumed that MEMPT has the value of 5 and GRAFPT has the value of 4.

Figure 2 shows how the graph is represented when the number of points available is less than GRAFPT. A new point, indicated as '3', is added on the right of the already represented ones ('1','2') and the scroll function remains disabled.

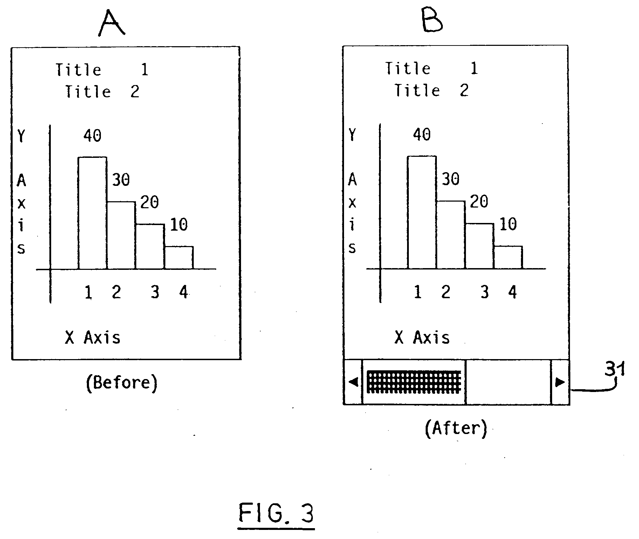

Figure 3 illustrates the case in which a forth point indicated by '4' has already been inserted in the graph and a new point '5' is to be received.

The new point '5' is stored in memory (21) only and the chart is not rebuilt. The scroll function is now enabled. In the case that the end user interface is window oriented, the scroll command may be managed by a scroll-bar (31) like that shown in figure 3.b. The scroll-bar is a window component that shows to a user that more information is available in a particular direction and can be scrolled into view. Scroll bars can operate either horizontally or vertically; in the preferred embodiment and in the related figures the scroll bar works horizontally. Another indication provided by the scroll bar is the position of the visible information with reference to the total amount of the information available. When, for example, the scroll bar is completely shifted to the left, the data displayed are the first data available in memory, which in the preferred embodiment are the oldest ones. On the contrary the bar completely shifted to the right means the data displayed are the last or the newest ones.
Further another kind of indication provided by the scroll bar is the amount of data displayed in respect to the total amount of data available in memory. Such an indication is given by the lenght of the scroll bar which is proportional to the ratio between the amount of displayed data and the amount of data available in memory.
Otherwise, the scroll command may be also realized by functional keystrokes or pull-down menus. By operating on the scroll function it is possible to show the points kept in memory, in the example the point '5'.

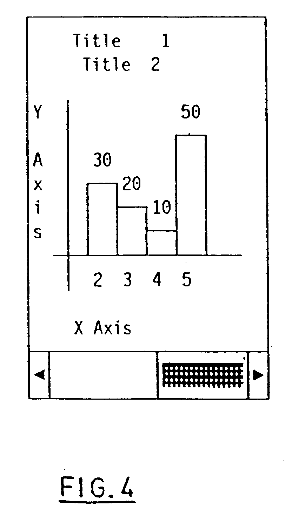

Figure 4 shows the displaying result of scroll function operation.

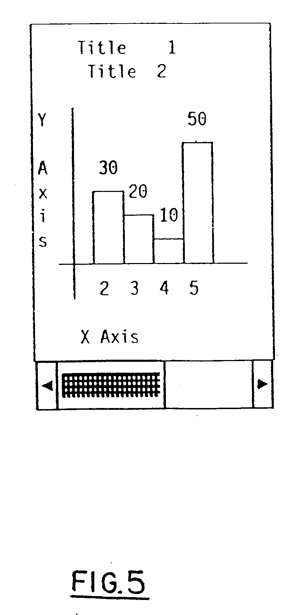

In figure 5 a new point '6' is received. It is necessary to discard the oldest point ('1') because the maximum number of points that can be stored in memory (MEMPT) is assumed to be 5. With respect to figure 4, the new value received leaves unchanged what the graph is showing but modifies the scroll-bar position. The point '1' is eliminated from memory (21) where it is replaced by the new point '6'. The scroll-bar, at its leftmost position, shows that point '2' is the first point available in memory (21). By operating on the scroll-bar, it is possible to display the point '6' as previously described for point '5'. Therefore the user can easily scroll the data values to the left or to the right and observe the trend of incoming points, without losing other information already shown on the screen and in particular information on the graph, like legends, titles and scales.

Also this invention has other advantages that the end user cannot see because they are related to the internal management of the values. If a user wants to see all the values that an historical database contains for a particular time period, the prior art systems had to know how many points they would receive to prepare the graph accordingly. The invention, instead, does not require to know in advance said information and can show as many points as the GRAFPT value. If the application is running on an operating system with multi-tasking capability, while the user is monitoring the graph, the process for getting the data may continue its execution in background. The invention can be used in a real-time environment as well. Any new point is stored in the temporary memory, and the user can look at points already received, while other points are incoming from the real-time source. From what described before it becomes apparent another advantage of the present invention, that is the complete independence of the source of the data from the graph management.

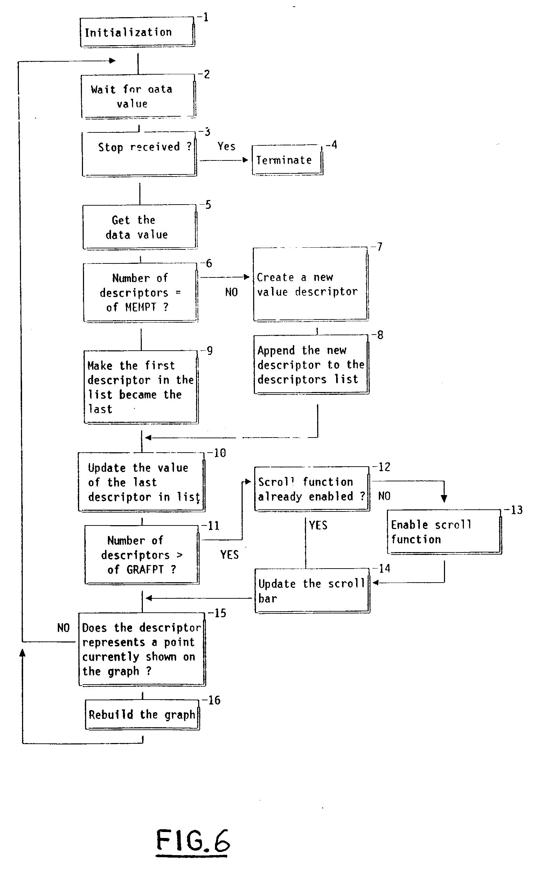

Figure 6 shows the flow diagram of a preferred way of implementing the method of the present invention. The process represented in figure 6 is stored in RAM memory (21), and is run by the processor (20) under control of a program stored in ROM memory (22).
Block (1) represents the graph initialization, including storing the MEMPT and GRAFPT values in RAM memory (21).
Block (2) waits for a data value to be received. From a processing point of view it makes no difference whether a value is received from an external channel (25) or from an external storage (26). This means that, even in case a number of values is already stored in memory (26), when the graph displaying process begins, said values are received one by one and the graph is built and displayed accordingly, like when new data value are received from an external channel on-line (25).
Unless a STOP command is received (block (3)), in which case the process terminates (block (4)), the control goes to block (5).
Block (5) gets a new data value. Block (6) compares the number of existing value descriptors with MEMPT. A value descriptor is a memory portion where all the information needed to graphically represent one point, including the data value, is saved. The value descriptors are chained together in a linked list structure.
If said number of existing value descriptors is equal to MEMPT, the process goes to block (9), otherwise the process goes to block (7) where a value descriptor is created.
In block (8) the process appends the newly created value descriptor to the list of the value descriptors and thereafter goes to block (10).
In block (9) the process updates the list pointers to make the first descriptor of the list (containing the oldest data) become the last one.
Block (10) substitutes the newly acquired data for the oldest ones which are contained in the' "new" last descriptor of the list. By this operation the leftmost value, the oldest one, is discarded from the memory. This logical sequence of the descriptors is maintained, upon termination of the process by block (4), while storing data values in external memory (26) for later processing.

Block (11) makes a comparison between the number of descriptors stored in the list and the GRAFPT values. If (number of descriptors) > GRAFPT, meaning that more points are kept in memory than those represented in the graph, the process goes (through block (12) and possibly block (13)) to block (14) where the scroll bar is updated and then to block (15). The scroll bar updating makes the user understand that a new value has been received, even if nothing changes in the graph as displayed. The user can see the scroll bar changing its position, its dimension or both. The position indicates whether to the right or to the left other data are available; the user can so decide to scroll the graph to display the hidden values. The dimension indicates how much of the global graph is actually displayed; the width of the bar roughly represents the ratio between the number of values actually displayed and the number of values actually available in memory. At its minimum the scroll-bar width will represent the ratio between GRAFPT and MEMPT.
Block (12) checks whether the scroll functions have already been enabled in a previous step; in case they have, the process goes to block (14); in case they have not, the process proceedes to enable said scroll functions (block (13)) before going to block (14).

Referring again to block (11), if the number of descriptors is not greater than GRAFPT, meaning that all points kept in memory can be represented in the graph and therefore no scroll function is needed, the process goes straight to block (15).
In the block (15) the process checks whether the updated or newly created value descriptor represents a point currently shown on the graph. If yes the process goes to block (16) where it refreshes the graph itself to allow the display of the new value.
If the value descriptor above was not currently shown, the process goes back to block (2), where the process waits for the next value.

The scroll function operates on the descriptors list keeping in memory the address (CURDESC) of the descriptor which represents the leftmost point shown on the graph. The last point to be shown is established by scanning the descriptor list starting from CURDESC for as many descriptors as the value of GRAFPT. At the end of the scroll function the graph is refreshed. Optionally block (15) of figure 6 could be replaced by a step that operates the scroll function to automatically show the last received value. This change might be interesting for real time applications.

## Claims

1. Method for managing display of numeric data in graphic format in a window-oriented data processing system, said numeric data being stored in the system and displayable according to the order in which they are received, the method comprising the steps of:
- creating a window, said window comprising the graphic lay-out and data definition;
- defining the number of said data to be displayed in said window;
- displaying said window and said data;
- creating a scroll bar having a portion the lenght of which is determined by the ratio between the number of said displayed data and the number of said stored data, the position of said portion controlling and indicating the position of said displayed data in respect of the totality of the available data;
- displaying said scroll bar;
- selecting the data to be displayed by scroll bar operation when the displayed data are less than the stored data, said scroll-bar operation not affecting the displaying of graphic lay-out and data definition.

2. The method of claim 1 wherein the stored data are obtained from external sources and continuously updated and wherein upon receipt of new or updated data, the indications of scroll bar are modified accordingly.

3. The method of claim 1 or 2 further comprising the step of:
- discarding the oldest numeric value stored in the system when, upon receipt of a new numeric value, the maximum storing capacity of the system is exceeded and storing said new numeric value.

4. The method of claim 1, 2 or 3 further comprising the step of:
- automatically activating scroll operation upon receipt of a new numeric value,

5. In a window-oriented data processing system, a system for managing display of numeric data in graphic format, said numeric data being stored in the system and displayable according to the order in which they are received, the system comprising:
- a window-oriented operating system for creating and managing windows, the windows comprising the graphic lay-out and data definition;
- means for defining the number of said data to be displayed in said window;
- display means for displaying said window and said data;
- means for creating and displaying a scroll bar having a portion the lenght of which is determined by the ratio between the number of said displayed data and the number of said stored data, the position of said portion controlling and indicating the position of said displayed data in respect of the totality of the available data;
- means for selecting the data to be displayed by scroll bar operation when the displayed data are less than the stored data, said scroll-bar operation not affecting the displaying of graphic lay-out and data definition.

6. The system of claim 5 further comprising:
- means for receiving and continuously updating the stored data from external sources; and
- means for modifying the indications of scroll bar according to the newly received or upated data.

7. The system of claim 5 or 6 further comprising:
- means for discarding the oldest numeric value stored in the system when, upon receipt of a new numeric value, the maximum storing capacity of the system is exceeded and storing said new numeric value.

8. The system of claim 5, 6 or 7 further comprising:
- means for automatically activating scroll operation upon receipt of a new numeric value.
